# EUROPEAN PATENT APPLICATION

(11) **EP 4 585 544 A1**
(43) Date of publication of application: **16.07.2025**
(21) Application number: 24215066.2
(22) Date of filing: 25.11.2024
(51) Int. Cl.: B65H 1/04, B65H 3/12, B65H 7/14

(54) **APPARATUS FOR PROCESSING SHEETS**

(30) Priority: 11.01.2024 JP 2024002694
(71) Applicant: Duplo Seiko Corporation, Kinokawa-shi, Wakayama 649-6551 (JP)
(72) Inventor: UEKI, Kazuma, Kinokawa-shi, 649-6551 (JP)
(74) Representative: Mewburn Ellis LLP

(57) **Abstract**

A method for processing a sheet at a predetermined position on the sheet in a processing part (19), includes: placing a plurality of the sheets in a placement part (33); reading, by a first reader (71) disposed in the placement part, information (J) printed in a predetermined area on the sheet spaced apart from a trailing edge (Eb) of the sheet by at least a first length (L1), the first length being the length in a plan view from a disposed position of a detector (91) to a disposed position of a contact member (37) with which leading edges (Ef) of the sheets placed in the placement part come into contact, the detector detecting the sheet on a conveyance path (5) for the sheet extending from the placement part to the processing part; and processing the sheet based on the information read by the first reader.

## Description

### BACKGROUND

### Technical Field:

The present disclosure relates to a sheet processing method, a reading method, an apparatus for processing sheets, and a sheet.

### Background Art:

A apparatus for processing sheets has been known that processes conveyed sheets by use of a processing member. JP2023155931A discloses a technology for reading an image of a barcode printed on a leading edge of a sheet S to obtain processing information to be applied to the sheet.

In JP2023155931A, the barcode of the sheet being conveyed is read by a camera halfway through the conveyance path. In order to properly read the barcode information, the sheet conveyance needs to be slowed down, which increases the time required for processing the sheet.

### SUMMARY

An object of the present disclosure is to provide a method for processing sheets and an apparatus for processing sheets capable of processing a sheet more quickly and properly.

A method for processing a sheet at a predetermined position on the sheet in a processing part according to an aspect of the present disclosure, includes:
placing a plurality of the sheets in a placement part;
reading, by a first reader disposed in the placement part, information printed in a predetermined area on the sheet spaced apart from a trailing edge of the sheet by at least a first length, the first length being the length in a plan view from a disposed position of a detector to a disposed position of a contact member with which leading edges of the sheets placed in the placement part come into contact, the detector detecting the sheet on a conveyance path for the sheet extending from the placement part to the processing part; and
processing the sheet based on the information read by the first reader.

A reading method for reading information printed on a sheet according to an aspect of the present disclosure, includes: reading, by a first reader disposed in a placement part, the information printed in a predetermined area on the sheet spaced apart from a trailing edge of the sheet by at least a first length, the first length being the length in a plan view from a disposed position of a detector detecting the sheet to a disposed position of a contact member with which leading edges of the sheets placed in the placement part come into contact, the detector being disposed on a conveyance path extending between a processing part that processes the sheet conveyed by a conveyance part at a predetermined position on the sheet and the placement part in which a plurality of the sheets to be processed in the processing part are placed.

An apparatus for processing sheets having a conveyance part that conveys a sheet and a processing part that processes the sheet conveyed by the conveyance part at a predetermined position on the sheet according to an aspect of the present disclosure, the apparatus includes:
a placement part in which a plurality of the sheets to be processed by the processing part are placed;
a detector that detects the sheet, the detector being disposed on a conveyance path extending between the placement part and the processing part;
a reader disposed in the placement part to read information printed on the sheet; and
a controller configured to control the processing part to process the sheet based on the information read by the reader, wherein
the reader reads the information printed in a predetermined area on the sheet spaced apart from a trailing edge of the sheet by at least a first length that is the length in a plan view from a disposed position of the detector to a disposed position of a contact member with which leading edges of the sheets placed in the placement part come into contact.

A sheet to be processed at a predetermined position on the sheet by a processing part of an apparatus for processing sheets according to an aspect of the present disclosure, wherein the sheet has processing information printed in a predetermined area on the sheet spaced apart from a trailing edge of the sheet by at least a first length, the first length is the length in a plan view from a disposed position of a detector detecting the medium to a contact member with which a leading edge of the sheets placed in the placement part come into contact, and the detector is disposed on a conveyance path for the sheet extending between the processing part and a placement part of the apparatus for processing sheets in which a plurality of the sheets are placed.

According to the present disclosure there can be provided a method for processing sheets and an apparatus for processing sheets capable of processing a sheet more quickly and properly.

### BRIEF DESCRIPTION OF DRAWINGS

Fig. 1 is a diagrammatic longitudinal sectional view of an apparatus for processing sheets according to an embodiment of the present disclosure;
Fig. 2 is a longitudinal sectional view of a feed part and a reject mechanism of the apparatus for processing sheets;
Fig. 3 is a plan view of Fig. 2;
Fig. 4 is an enlarged side view of a first reader of the apparatus for processing sheets;
Fig. 5 is a plan view of the first reader;
Fig. 6 is a view of the first reader as seen from the downstream side;
Fig. 7 is an example of a sheet to be processed by the apparatus for processing sheets;
Fig. 8 is a view showing a use status of the apparatus for processing sheets;
Fig. 9 is a view showing a use status of the apparatus for processing sheets;
Fig. 10 is a view showing a use status of the apparatus for processing sheets;
Fig. 11 is a view showing a use status of the apparatus for processing sheets;
Fig. 12 is a view showing a use status of the apparatus for processing sheets;

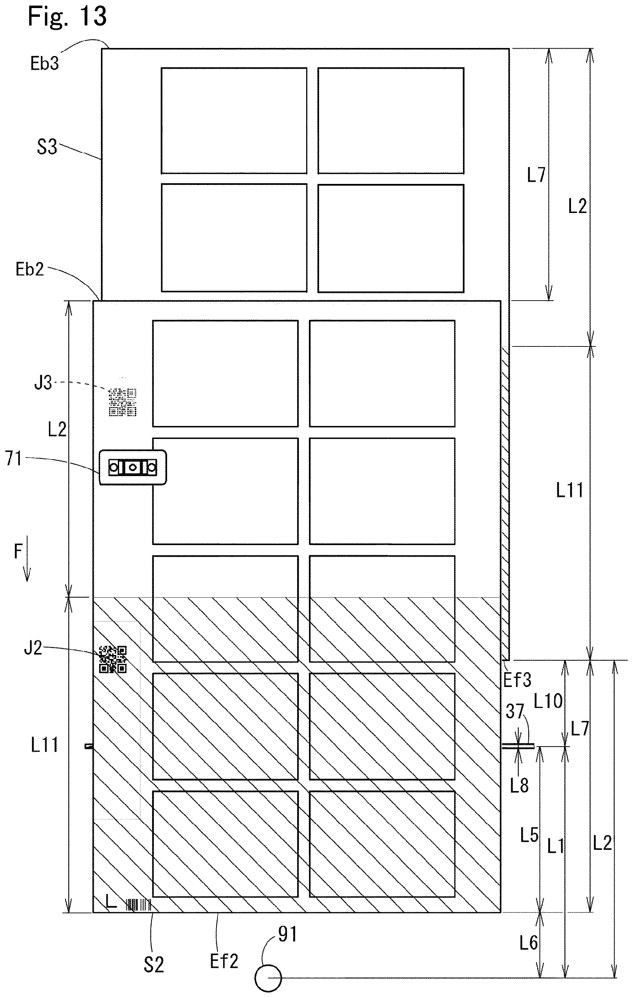

Fig. 13 is a view showing a use status of a apparatus for processing sheets according to another embodiment; and

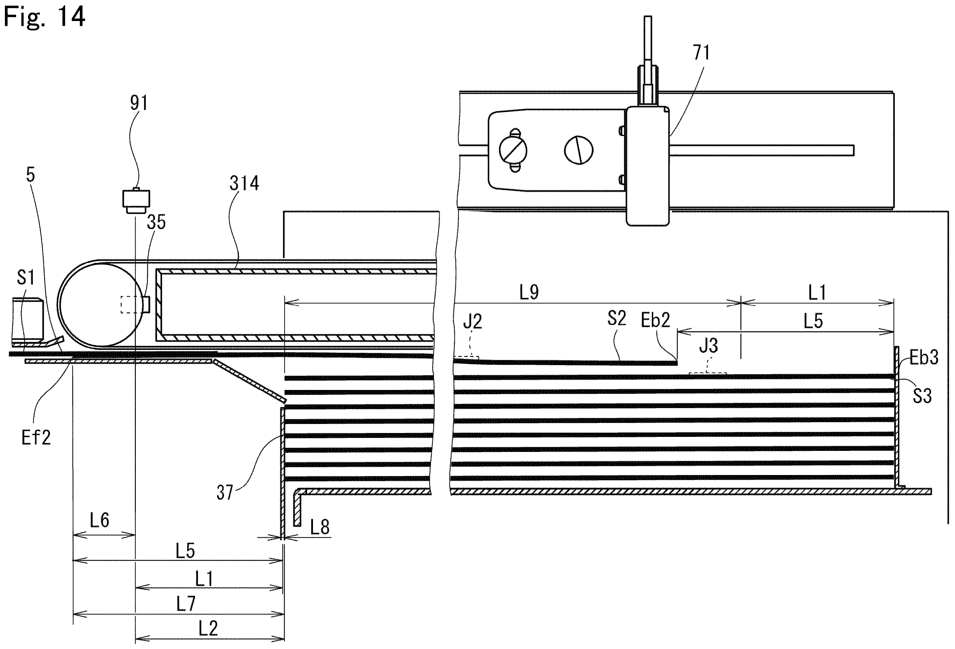

Fig. 14 is a view showing a use status of the apparatus for processing sheets of the another embodiment.

### DETAILED DESCRIPTION

A method for processing a sheet at a predetermined position on the sheet in a processing part according to the first aspect of the present disclosure, includes:
placing a plurality of the sheets in a placement part;
reading, by a first reader disposed in the placement part, information printed in a predetermined area on the sheet spaced apart from a trailing edge of the sheet by at least a first length, the first length being the length in a plan view from a disposed position of a detector to a disposed position of a contact member with which leading edges of the sheets placed in the placement part come into contact, the detector detecting the sheet on a conveyance path for the sheet extending from the placement part to the processing part; and
processing the sheet based on the information read by the first reader.

Thus, the sheet information can be read within the placement part by the first reader with no need to decelerate the conveyance, enabling the sheet to be processed more quickly. Even if a plurality of sheets are conveyed overlapping with each other and separated on the conveyance path just short of the disposed position of the detector, the first reader can properly read the information on the sheet placed in the placement part.

The method according to the second aspect of the present disclosure, in the first aspect, wherein the predetermined area is an area spaced apart from the trailing edge of the sheet by at least a second length that is the length in a plan view from the disposed position of the detector to a downstream edge of the sheet placed in the placement part. The first reader can properly read information on the sheet placed in the placement part even if the leading edge of the sheet is placed away from the contact member in the placement part.

The method according to the third aspect of the present disclosure, in the first or second aspect, includes: reading the information on the sheet by a second reader disposed downstream of the placement part; and determining a position of the sheet on the conveyance path based on the information read by the second reader to adjust a processing position on the sheet. According to this aspect, the sheet can be processed more properly.

The method according to the fourth aspect of the present disclosure, in the first aspect, includes: reading the information on a succeeding sheet by the first reader after the detector detects the trailing edge of the sheet.

When the first reader reads the information of the subsequent sheet after the detector detects the trailing edge of the sheet, the first reader can properly read the information of the subsequent sheet placed in the placement part.

The method according to the fifth aspect of the present disclosure, in the first aspect, wherein when the detector detects the sheet having a fourth length longer than a third length that is the length of the sheet in the conveyance direction, the sheet having the fourth length is not processed in the processing part.

When the detector detects the sheet having the fourth length longer than the third length that is the length of the sheet in the conveyance direction, if the sheet having the fourth length is not processed by the processing part, the sheets can be prevented from being improperly processed when the sheets are conveyed overlapping each other.

A reading method for reading information printed on a sheet according to the sixth aspect of the present disclosure, includes: reading, by a first reader disposed in a placement part, the information printed in a predetermined area on the sheet spaced apart from a trailing edge of the sheet by at least a first length, the first length being the length in a plan view from a disposed position of a detector detecting the sheet to a disposed position of a contact member with which leading edges of the sheets placed in the placement part come into contact, the detector being disposed on a conveyance path extending between a processing part that processes the sheet conveyed by a conveyance part at a predetermined position on the sheet and the placement part in which a plurality of the sheets to be processed in the processing part are placed.

In consequence, even though a plurality of sheets are conveyed overlapping with each other and separated on the conveyance path just short of the disposed position of the detector, the first reader can properly read the information on the sheet placed in the placement part.

An apparatus for processing sheets having a conveyance part that conveys a sheet and a processing part that processes the sheet conveyed by the conveyance part at a predetermined position on the sheet according to the seventh aspect of the present disclosure, the apparatus includes:
a placement part in which a plurality of the sheets to be processed by the processing part are placed;
a detector that detects the sheet, the detector being disposed on a conveyance path extending between the placement part and the processing part;
a reader disposed in the placement part to read information printed on the sheet; and
a controller configured to control the processing part to process the sheet based on the information read by the reader, wherein
the reader reads the information printed in a predetermined area on the sheet spaced apart from a trailing edge of the sheet by at least a first length that is the length in a plan view from a disposed position of the detector to a disposed position of a contact member with which leading edges of the sheets placed in the placement part come into contact.

In consequence, even though a plurality of sheets are conveyed overlapping with each other and separated on the conveyance path just short of the disposed position of the detector, the first reader can properly read the information on the sheet placed in the placement part.

The apparatus for processing sheets according to the eighth aspect of the present disclosure, in the seventh aspect, wherein the reader is disposed in a movable manner.

When the first reader is disposed in such a manner as to be movable, it can properly read various pieces of sheet information printed at different positions.

A sheet to be processed at a predetermined position on the sheet by a processing part of an apparatus for processing sheets according to the ninth aspect of the present disclosure, wherein the sheet has processing information printed in a predetermined area on the sheet spaced apart from a trailing edge of the sheet by at least a first length, the first length is the length in a plan view from a disposed position of a detector detecting the medium to a contact member with which a leading edge of the sheets placed in the placement part come into contact, and the detector is disposed on a conveyance path for the sheet extending between the processing part and a placement part of the apparatus for processing sheets in which a plurality of the sheets are placed.

As a result, even though a plurality of sheets are conveyed overlapping with each other and separated on the conveyance path just short of the disposed position of the detector, the information on the sheet placed in the placement part can properly be read by the first reader.

The sheet according to the tenth aspect of the present disclosure, in the ninth aspect, wherein plural pieces of the information are printed on the sheet, and among the plural pieces of information, an information piece at a most upstream position is printed in the predetermined area. According to this aspect, the information piece at the most upstream position can be read by the first reader.

### First Embodiment

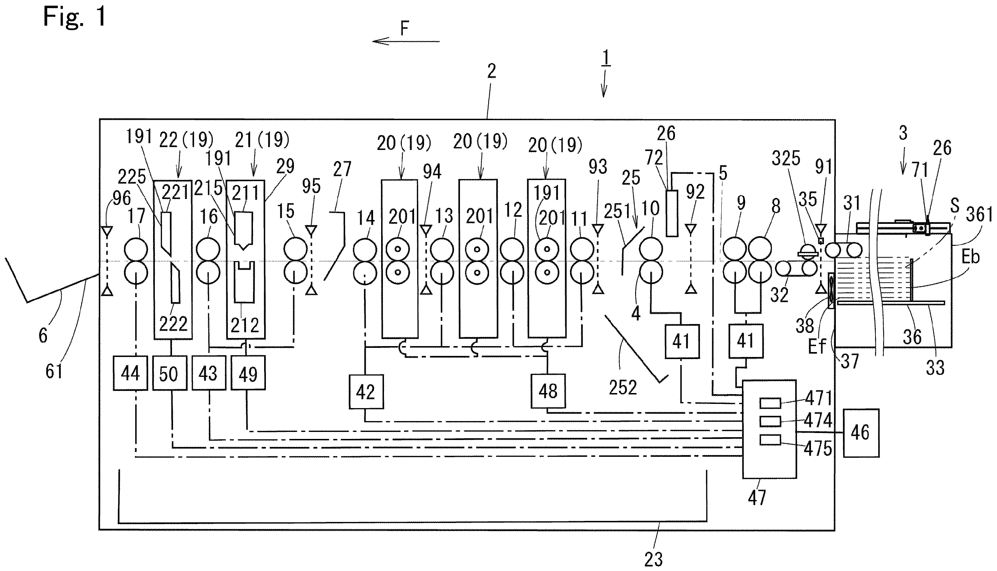

An apparatus for processing sheets 1 according to a first embodiment will now be described in detail with reference to the drawings. As shown in the overall configuration diagram of Fig. 1, the apparatus for processing sheets 1 includes: a device body 2; a placing table 36 that is disposed on the upstream side of a conveyance path 5 for a sheet S in the device body 2; and a discharge table 61 that is disposed on the downstream side of the conveyance path 5.

The device body 2 includes a conveyance part 4 that is disposed within the device body 2, which conveys the sheet S along the conveyance path 5 extending from the placing table 36 to the discharge table 61. The conveyance part 4 includes a plurality of roller pairs 8 to 17 that are driven by a plurality of first to fifth motors 41 to 45 independent of each other for each predetermined region. The plurality of roller pairs 8 to 17 are arranged side by side in a conveyance direction F of the sheet S. The conveying speed of the sheet S in the conveyance part 4 can be, for example, 0.2 m/sec to 3.0 m/sec.

A processing part 19 is disposed at appropriate positions on the conveyance path 5 for the sheet S. The processing part 19 processes the sheet S conveyed by the conveyance part 4 at a predetermined position on the sheet S. The processing part 19 includes a processing member 191. In the embodiment shown in Fig. 1, the processing part 19 includes three slitters 20, a creaser 21, and a transverse cutting part 22, from the upstream side to the downstream side of the conveyance path 5 for the sheet S.

This processing part 19 may be fixedly disposed in the device body 2, but for flexible handling, device size reduction, and ease of replacement work, it is disposed as units in such a manner as to be freely attachable to or detachable from the device body 2. These processing units are configured to have the same external dimensions and shape so that they can be attached to or detached from any installation locations on the conveyance path 5.

The slitter 20 cuts the sheet S along the conveyance direction F of the conveyance part 4. The slitter 20 includes a pair of left and right slitters 201 and a slitter motor 48. The slitters 201 are each configured to be movable to a proper position in a width direction W of the sheet S by a moving part (not shown). When cutting of the sheet S is not required, the slitters 201 are retracted to the outside of the conveyance path 5 for the sheet S. The movement and positioning of the slitters 201 in the width direction W of the sheet S is controlled by a semiconductor processor 475 such as a CPU or IC. The slitter motor 48 is a drive source for rotationally driving the slitters 201 when cutting along the conveyance direction F.

A trimmings removal part 27 is disposed downstream of the slitter 20. The trimmings removal part 27 is for discarding trimmings generated by cutting in the slitter 20 to the outside of the conveyance path 5 for the sheet S. The trimmings removal part 27 includes a plurality of trimmings removal devices, a transverse positioning shaft, and a device movement motor (not shown). The trimmings removal devices are configured to be movable in the width direction W of the sheet S with the rotation of the transverse positioning shaft. Since the trimmings removal devices arranged at predetermined positions are obstacles on the conveyance path 5 for the sheet S, when the sheet S passes through the trimmings removal part 27, the trimmings contained in the sheet S is dropped and collected in a trashcan 23.

The creaser 21 forms a folding pattern on the sheet S along the width direction W of the sheet S. The creaser 21 includes a crease blade 215. The crease blade 215 includes an upper die 211 and a lower die 212 extending in the width direction W of the sheet S. A crease drive part 49 is a drive source for driving the upper die 211 in the up and down direction. With the sheet S clamped between the upper die 211 and the lower die 212, the upper die 211 is driven downward to press the sheet S with a convex portion of the upper die 211 into a concave portion of the lower die 212, thereby forming a folding pattern with a substantially semicircular cross section on the sheet S.

The transverse cutting part 22 cuts the sheet S along the width direction W. The transverse cutting part 22 includes a cutting blade 225 and a transverse cut drive part 50. The cutting blade 225 includes an upper blade 221 and a lower blade 222 extending in the width direction W of the sheet S. The transverse cut drive part 50 is a drive source for driving the upper blade 57 in the up-down direction so that the upper blade 57 is pressed toward the lower blade 58.

The transverse cut drive part 50 drives the upper blade 221 downward with the sheet S clamped between the upper blade 221 and the lower blade 222, to cut the sheet S by the upper blade 221 and the lower blade 222. Trimmings generated by cutting falls downward and is collected in a trash can 23. When the margin of the sheet S to be cut in the conveyance direction F is wide, it is possible to divide the sheet S into narrow regions extending in the conveyance direction F of a plurality of sheets S and cut them finely with narrow widths.

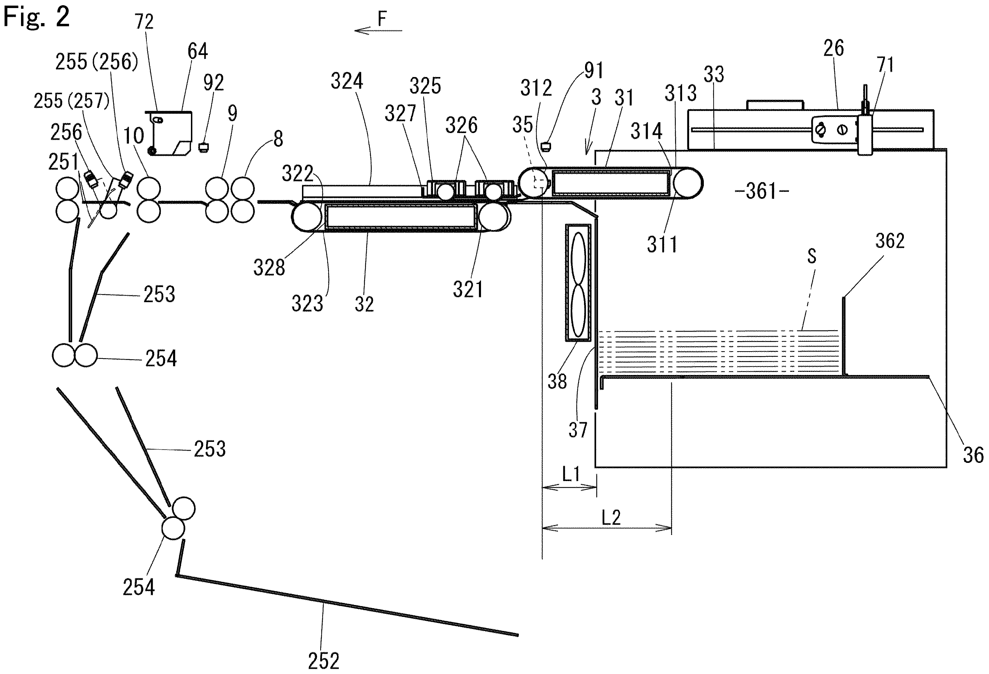

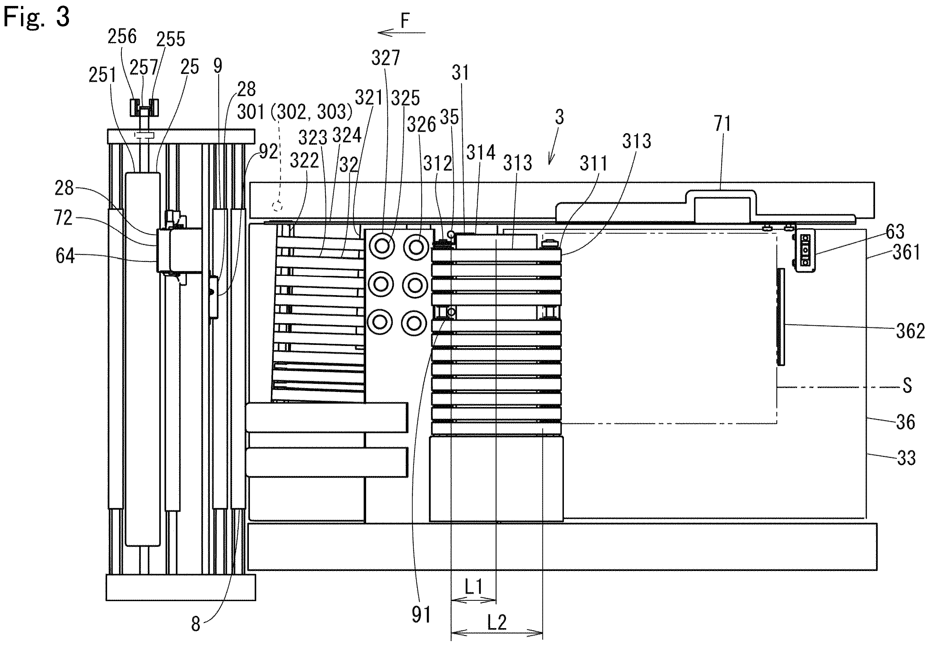

A feed part 3 and a reject mechanism 25 are disposed upstream of the slitter 20. Fig. 2 is a longitudinal sectional view of the feed part 3 and the reject mechanism 25, and Fig. 3 is a plan view of Fig. 2. The feed part 3 feeds the sheet S to the conveyance path 5. The feed part 3 includes a placement part 33, a suction conveyor 31, a skew correction mechanism 32, and a multi-feed detector 35.

The placement part 33 includes the placing table 36 and a contact member 37. A plurality of sheets S to be processed in the processing part 19 are placed in the placement part 33. The placing table 36 is raised and lowered by a lifting part (not shown). A guide wall 361 with which a side edge Es of the sheet S comes into contact is disposed to the side of the placing table 36. The contact member 37 is disposed in front of the placing table 36. The contact member 37 is formed in a plate shape and extends in the up-down direction. A leading edge Ef of the sheet S placed in the placement part 33 comes into contact with the contact member 37. The contact member 37 restrains the leading edge Ef of the sheet S lying at the lower position among the sheets S on the placing table 36 from advancing to the downstream side. A blower 38 is disposed in front of the contact member 37. The contact member 37 has an air vent (not shown) at the position where the blower 38 is disposed. The airflow from the blower 38 passes through the air vent and is sent rearward. As a result, the stack of sheets S is separated in the up-down direction.

The suction conveyor 31 attracts, sucks, and conveys the sheets S placed on the placing table 36 one by one by using a suction means (not shown). The suction conveyor 31 includes an endless belt 313 that runs around a pair of rollers 311 and 312. The belt 313 runs parallel to the conveyance direction F. A plurality of belts 313 are arranged side by side in the width direction W that is perpendicular to the conveyance direction F of the sheet S. A suction box 314 is disposed internal to the belts 313. The suction box 314 has a suction port formed on the undersurface and sucks the sheet S onto the undersurface of the suction box 314.

The skew correction mechanism 32 transports the sheet S conveyed by the suction conveyor 31 on an endless belt 323 extending across a pair of rollers 321 and 322. The endless belt 323 is arranged tilted at a predetermined amount toward the guide member 324 with respect to the conveyance direction F of the sheet S. The sheet S contact surface of the guide member 324 is positioned in the same plane as the sheet S contact surface of the guide wall 361.

In the skew correction mechanism 32, the sheet S is conveyed while the side edge Es is pressed against the guide wall 324 parallel to the conveyance direction F. As a result, the sheet S is conveyed with the side edge Es aligned with the guide wall 324. The skew correction mechanism 32 includes a pressing part 325. The pressing part 325 has a pressing ball 326 and a support member 327. The pressing ball 326 is formed in a spherical shape. The pressing ball 326 is supported by the support member 327 in such a manner as to be freely rotatable. The pressing ball 326 presses the sheet S on the belt 323 from above when the conveyance direction F of the skewing sheet S is corrected. A suction box 328 is disposed internal to the belt 323, and the sheet is conveyed while being sucked onto the belt 323 by a suction means (not shown).

The reject mechanism 25 is disposed downstream of a roller 10 of the conveyance part 4. The reject mechanism 25 includes a revolving member 251, a revolution detector 255, a guide member 254, a reject roller 253, and a reject tray 252. The revolving member 251 assumes a posture blocking the conveyance path 5 when activated. The revolution detector 255 includes two optical sensors 256 and a light shielding plate 257. The light shielding plate 257 is fixed to the revolving member 251, and moves between the two optical sensors 256 as the revolving member 251 revolves. This detects whether the revolving member 251 is in a horizontal posture indicated by a solid line in which the revolving member 251 supports the sheet S from below, or in a tilted posture indicated by a two-dot chain line in which the revolving member 251 blocks the conveyance path 5 to reject the sheet S.

If there is a sheet S that should be rejected for some reason, such as the code C or mark M of the sheet S being unclear, the revolving member 251 revolves to drop the sheet S below the conveyance path 5. Below the conveyance path 5, the rejected sheet S is guided by the guide member 254 and the reject roller 253 and is collected in the reject tray 252.

The multi-feed detector 35 detects multi-feed of the sheets S. The multi-feed detector 35 includes an optical sensor, an ultrasonic sensor, or the like. When the multi-feed detector 35 is an ultrasonic sensor, the output intensity is adjusted depending on the thickness of the sheets S, so that multi-feed can be properly detected even for thick sheets S.

The apparatus for processing sheets 1 includes a reading mechanism 26. The reading mechanism 26 reads information for processing the sheet S, which is printed in a predetermined area on the sheet S. The reading mechanism 26 includes a first reader 71 and a second reader 72. The first reader 71 and the second reader 72 each include an imaging part. The imaging parts may include cameras 63 and 64. The cameras 63 and 64 can be either a one-dimensional CCD image sensor or a two-dimensional CCD image sensor that reads a planar image. The one-dimensional CCD image sensor reads the image by line scanning. The one-dimensional CCD image sensor is preferably used because of its low cost. The cameras 63 and 64 can be a CMOS image sensor or the like instead of the CCD image sensor. The cameras 63 and 64 can be cameras that can read out 2 million to 100 million pixels, 30, 60, or 100 frames per second, with a resolution of about 1/10. Furthermore, by using a global shutter, an image with less distortion can be obtained and the processing accuracy of processed products can be improved.

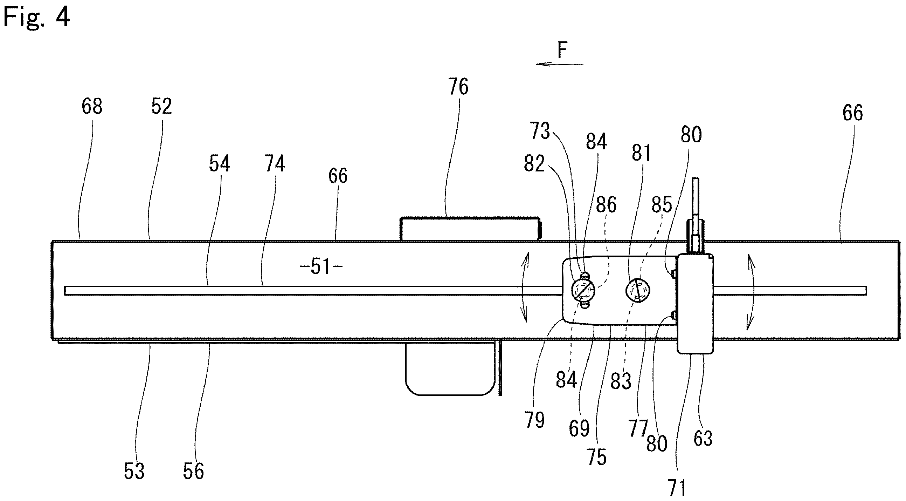

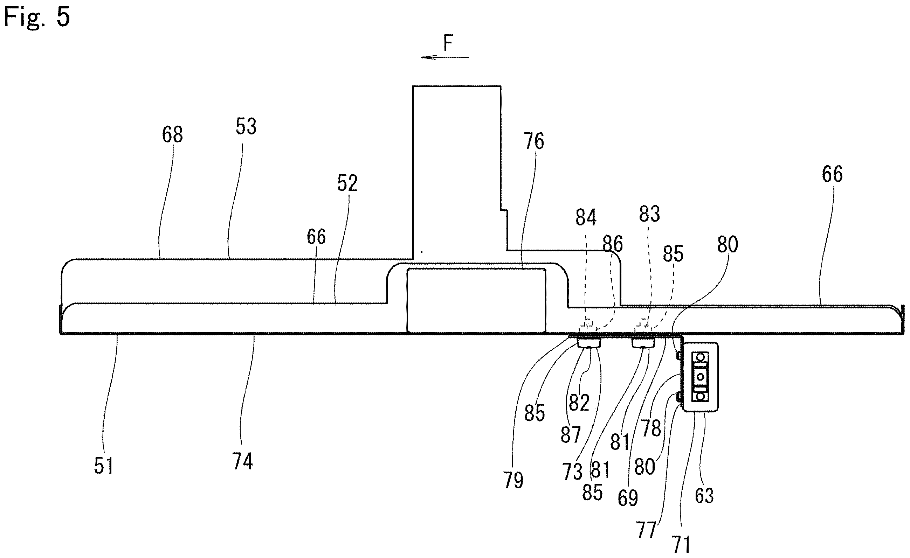

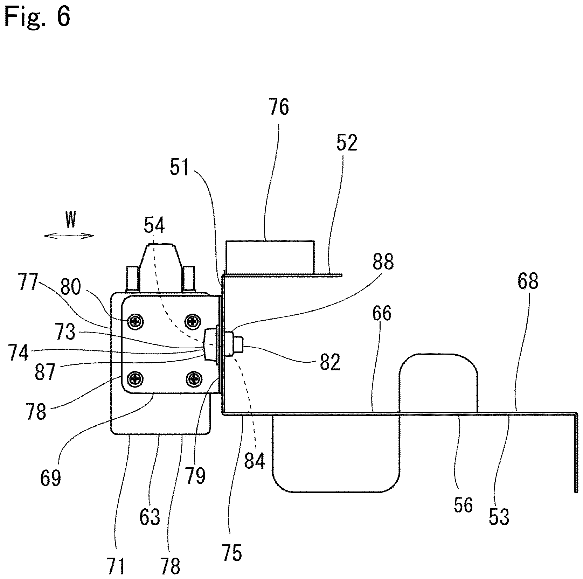

The first reader 71 is disposed on the placement part 33. The first reader 71 is disposed above the placing table 36 and detachably on the upper end of the guide wall 361. Fig. 4 is a view of the first reader 71 as seen from the placing table 36 side, and Fig. 5 is a plan view of the first reader 71. Fig. 6 is a view of the first reader 71 as seen from the downstream side.

The camera 63 of the first reader 71 is supported by a support part 66. The support part 66 includes an angle adjuster 73, a position adjuster 74, a mounting portion 75, and a read controller 76. The angle adjuster 73 adjusts the angle of the camera 63. The position adjuster 74 adjusts the position of the camera 63 in the conveyance direction F.

Both the angle adjuster 73 and the position adjuster 74 include a holder 69, a support body 68, a pivot screw 81, a guide screw 82, and nuts 86 and 88. The holder 69 holds the camera 63. As shown in Fig. 5, the holder 69 includes a holder member 77 formed by bending a thin plate into an L-shape in a plan view. The holder member 77 includes a fixing portion 78 extending in the width direction W in a plan view, and a locking portion 79 extending in the conveyance direction F in a plan view. The camera 63 is fixed by a screw 80 to the surface of the fixing portion 78 upstream in the conveyance direction F.

The support body 68 includes a vertical plate 51, an upper plate 52, and a lower plate 53. The vertical plate 51 extends in the up-down direction. The upper plate 52 extends transversely from the upper end of the vertical plate 51. The lower plate 53 extends transversely from the lower end of the vertical plate 51. The lower plate 53 is disposed facing the upper plate 52. The lower plate 53 can be formed larger than the upper plate 52. Fig. 6 shows a case where the length of the width direction W of the lower plate 53 is two to three times that of the upper plate 52. As shown in Fig. 4, an elongated aperture 54 is formed along the conveyance direction F substantially at the center of the vertical plate 51 in the up-down direction.

The pivot screw 81 and the guide screw 82 are inserted into the elongated aperture. The pivot screw 81 pivotally supports the camera 63 via the holder member 77 so that the camera 63 can swing freely. When the camera 63 swings, the locking portion 79 slides on the vertically extending plane of the vertical plate 51. The guide screw 82 guides the swing of the holder member 77.

The locking portion 79 is disposed with a pivot hole 83 and a guide hole 84. The pivot screw 81 is inserted into the pivot hole 83. A knob 85 is disposed on one end of the pivot screw 81 located above the placing table 36. A nut 86 is screwed into the other end of the pivot screw 81.

As shown in Fig. 4, the guide hole 84 has a predetermined length in the up-down direction. The guide hole 84 is formed to be slightly curved along the arc of a circle centered on the pivot screw 81. The guide screw 82 is inserted into the guide hole 84. A knob 87 is disposed on one end of the guide screw 82 lying above the placing table 36 for the sheet S. The nut 88 is screwed onto the other end of the guide screw 82. The position of the guide screw 82 within the guide hole 84 is relatively moved, thereby guiding the swinging action of the camera 63 about the pivot screw 81 as its pivotal center.

The up-down length of the elongated aperture 54 in the vertical plate 51 is formed to be a predetermined amount larger than the diameters of both the pivot screw 81 and the guide screw 82. This allows the pivot screw 81 and the guide screw 82 to be inserted into the elongated aperture. The up-down length of the elongated aperture 54 is formed to be smaller than the diameters of the knobs 85 and 87 and the nuts 86 and 88.

The pivot screw 81 is inserted from the upper position side of the placing table 36 outwardly through the pivot hole 83 and the elongated aperture 54 in the mentioned order, and the nut 86 is screwed onto the end. The guide screw 82 is inserted from the upper position side of the placing table 36 outwardly through the guide hole 84 and the elongated aperture 54 in the mentioned order, and the nut 88 is screwed onto the end. Thus, the holder member 77 can be fixed at a predetermined position in the elongated aperture 54 at a predetermined angle by the knobs 85 and 87 and the nuts 86 and 88.

The nuts 86 and 88 are loosened and the camera 63 is moved to a proper position in the conveyance direction F. The nuts 86 and 88 are loosened and the camera 63 is swung via the holder member 77 around the pivot screw 81 as the pivotal center while the guide screw 82 is guided by the guide hole 84. Afterward, the pivot screw 81 and the nut 86, and the guide screw 82 and the nut 88 are tightened. This makes it possible to fix the camera 63 to the support body 68 at a predetermined position suitable for image capturing in the conveyance direction F and at a predetermined angle suitable for image capturing. In this manner, the angle and position of the camera 63 can be adjusted.

The mounting portion 75 includes a rectangular sheet-like magnet 56. The magnet 56 is fixed to the undersurface of the lower plate 53. When the guide wall 361 is formed of a magnetic material such as metal, the magnet 56 allows the support body 68 to be removably disposed on the guide wall 361.

The read controller 76 transmits a signal from the camera 63 to the controller 47. The read controller 76 is disposed on the upper surface of the upper plate 52.

The second reader 72 is disposed downstream of the placement part 33. The second reader 72 is disposed between the feed part 3 and the processing part 19. The second reader 72 reads information of the sheet S and detects, based on the read information, the angle of the sheet S on the conveyance path and the position of the sheet S in the conveyance direction F and width direction W. The second reader 72 is held in the device body 2 by a holder (not shown).

A detector 90 is disposed at a proper position on the conveyance path 5 for the sheet S. The detector 90 detects the sheet S. The detector 90 includes an optical sensor, an ultrasonic sensor, or the like. When the detector 90 is an optical sensor, it can be configured with a transmission type or reflection type optical sensor. The detector 90 includes a light-emitting element and a light-receiving element that are disposed facing each other above and below the conveyance path 5. The detector 90 detects the leading edge Ef, which is the downstream edge in the conveyance direction F of the sheet S, or a trailing edge Eb, which is the upstream edge in the conveyance direction F of the sheet. The detector 90 detects the presence or absence of the sheet S by blocking the detection light when the sheet S passes between the light-emitting element and the light-receiving element.

The detector 90 includes a first detector 91 to a sixth detector 96. The first detector 91 to the sixth detector 96 are electrically connected to an interface of the controller 47. The first detector 91 is disposed along the conveyance path 5 for the sheet S at the most upstream side among the first to sixth detectors 91 to 96 constituting the detector 90. Fig. 3 shows a case where the first detector 91 is disposed at substantially the same position in the conveyance direction F as the disposed position of the multi-feed detector 35. The first detector 91 is disposed at a different position that is spaced a predetermined amount from the multi-feed detector 35 in the width direction W. The first detector 91 detects the leading edge Ef and the trailing edge Eb of the sheet S transferred from the suction conveyor 31 to the skew correction mechanism 32.

The second detector 92 is positioned in the upstream vicinity of the second reader 72 in the conveyance direction F. The third detector 93 shown in Fig. 1 is positioned in the upstream vicinity of the slitter 20 in the conveyance direction F. The fourth detector 94 is positioned halfway through the slitter 20. The fifth detector 95 is positioned in the upstream vicinity of the creaser 21 in the conveyance direction F. The sixth detector 96, which is at the most downstream side in the conveyance direction F, is positioned in the upstream vicinity of a paper receiving unit 6 in the conveyance direction F.

The first to sixth detectors 91 to 96 detect a jam of the sheet S on the conveyance path 5. The position of each sheet S conveyed on the conveyance path 5 is uniquely detected based on the position of the sheet S detected by the first detector 91. The fifth detector 95 is used to correct the position of the sheet S obtained by the first detector 91 in case that the conveyance path 5 becomes longer with the result that the positional deviation of the sheet S on the conveyance path 5 in the conveyance direction F accumulates. This allows the controller 47 to more accurately grasp the position of the sheet S on the conveyance path 5. The sixth detector 96 detects the discharge of a processed product Q to the paper receiver 6.

The apparatus for processing sheets 1 includes the controller 47 disposed in the device body 2, for controlling various types of action in the device. The controller 47 is electrically connected to: a memory 474 such as a ROM (flash ROM) or a RAM; the various sensors 35 and 90 to 96 as input devices; the various motors 41 to 45, 48, and 49 as output devices; an operation panel 46 as an input/output device; a calculation part 471 for performing various calculation processes; and a processor 475 for controlling the action of the parts such as the feed part 3, the conveyance part 4, and the processing part 19.

The memory 474 temporarily stores via the CPU various types of information such as: image data of a barcode B and a mark M and image data of a code C captured by the cameras 63 and 64; information on the sheet S such as the size and thickness of the sheet S; positional information of the mark M on the sheet S; various types of processing information; and positional information of the sheet S obtained when the leading end Ef or trailing end Eb of the sheet S passes through the detector 90.

The longitudinal length of the sheet S is stored in the RAM based on information such as the size and thickness of the sheet S obtained from the information and on input information from the operation panel 46. Thus, by detecting either the leading edge Ef on the downstream side or the trailing edge Eb on the upstream side of the sheet S, the position of the sheet S on the conveyance path 5, particularly the trailing edge position of each sheet S, can be uniquely determined based on the disposed position of the first detector 91.

The conveying drive source and the processing drive source for the sheet S disposed in the apparatus for processing sheets 1 are motors capable of proper positioning, such as a stepping motor, a DC motor, and a servo motor. The stepping motor rotates by a predetermined step angle by receiving a pulse signal. By using a stepping motor as either or both of the conveying drive source and the processing drive source, the conveyance position of the sheet S and the moving positions of various apparatuses for processing sheets can be controlled at high speed and with high precision.

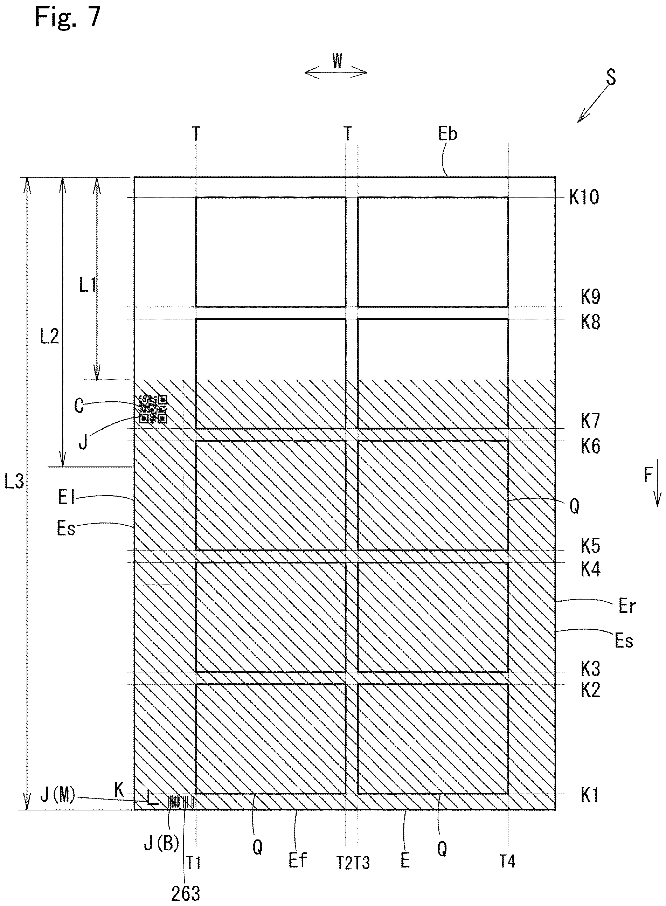

Fig. 7 shows an example of the sheet S. Information J printed in a predetermined area of the sheet S may include codes such as a one-dimensional barcode, a QR code (registered trademark), a two-dimensional barcode, a processing code, a job code, and an identification code, marks such as a position mark, a leading edge mark, an end mark, a registration mark, and a skew mark, a job ID, letters, numerals, numbers, job numbers, symbols, colors, and the like.

A code can be given for each piece of processing information. The code may include individual piece of processing information to be applied to each sheet S. The processing information is information on working to be applied to a sheet. The processing information may include, for example: the third length that is the length of the sheet S in the conveyance direction F; the length of the sheet S in the width direction W; the position of the mark on the sheet S; the pattern, shape, size, and type of the mark; positions of various types of working such as cutting along the conveyance direction F and the width direction W, perforations, corner cuts and creases; information on the information reading accuracy of the reading mechanism 26, whether or not the expansion and contraction rates at the processing position needs to be corrected based on the image printed on the sheet S; whether or not the slant angle needs to be corrected; the length from an edge E of the sheet S to the mark at the front corner of the sheet S; information on the allowable range of the working angle, and information on a customer to whom the processed products Q are delivered, etc.

In Fig. 7, the processing information recorded includes: cutting in the conveyance direction F along slit positions T1 to T4; cutting in the width direction W orthogonal to the conveyance direction F along cutting positions K1 to K10; and obtaining a total of 10 processed products Q in two rows and five columns from one sheet S.

The information J of the sheet S shown in Fig. 7 is printed in a predetermined area of the sheet S indicated by shaded lines, which is apart from the trailing edge Eb of the sheet S at least a first length L1 that is the length in a plan view from the disposed position of the first detector 91 to the disposed position of the contact member 37. Assuming that the length from the position of the first length L1 from the trailing edge Eb of the sheet S to the leading edge of the sheet S is a ninth length L9, the information J is printed in an area indicated by shaded lines corresponding to the ninth length L9. This shaded area is an area in which the information of the lower sheet S can be hidden by the upper sheet S when conveyance of the sheet S stops without the leading edge Ef being detected by the first detector 91 as a result of the sheet S not reaching the disposed position of the first detector 91 though it has been conveyed a predetermined distance from the placing table 36 to the conveyance path 5.

All of the information J, including the two-dimensional code C, the barcode B, and the mark M, is printed in the vicinity of a left edge EL of the sheet S in Fig. 7. The two-dimensional code C is printed at a position that is approximately one-third of a third length L3, which is the length of the sheet S in the conveyance direction F, from the trailing edge Eb of the sheet S. One-third of the third length L3 is longer than the first length L 1.

For example, if the first length L1, which is the length in a plan view from the disposed position of the first detector 91 to the disposed position of the contact member 37, is 100 mm, the two-dimensional code C can be disposed within an area of 101 mm to 297 mm from the trailing edge Eb of the sheet S, more than 100 mm forward of the trailing edge Eb.

The barcode B and the mark M are printed side by side near the leading edge Ef of the sheet S. The mark M indicates the reference position for processing the sheet S in the processing part 19. The range in which the second reader 72 reads the image around the mark M can be, for example, a range of 20 mm from the leading edge Ef of the sheet S and 20 mm from the left edge EL. In Fig. 7, the mark M is shown to be L-shaped in a plan view.

Various types of processing information required for processing the sheet S may also be input by the user via the operation panel 46 or a personal computer (not shown) as necessary.

The action of the apparatus for processing sheets 1 will then be described. First, when a user turns on a main power switch to start the operation of the apparatus for processing sheets 1, the controller 47 performs various internal action checks. The user of the apparatus for processing sheets 1 places a plurality of sheets S on the placing table 36. The user places the sheets S at a position on the placing table 36 where one side edge Es of the sheets S comes into contact with the guide wall 361 while the leading edge Ef of the sheets S comes into contact with the contact member 37. The user also manipulates the angle adjuster 73 and the position adjuster 74 to move the first reader 71 to a position where the information on the sheets S can properly be read.

Subsequently, the controller 47 performs preparatory action for processing the sheet S. In the preparatory operation, the controller 47 drives the lifting part of the paper feed part 3. The placing table 36 is moved from a standby position to a position for feeding the sheets S to the conveyance path 5. Then, the controller 47 drives the blower 38. The sheets S are separated one by one by the airflow from the blower 38. The controller 47 controls the moving part of the slitter 20 so that the slitter 201 located at the cutting position of the most recent job is temporarily moved to the home position.

The controller 47 drives the transverse cut drive part 50 to move the upper blade 221 to the upper limit position in the transverse cutting part 22. The controller 47 starts excitation of the conveyance drive parts, i.e., the motors 41 to 45 in the conveyance part 4.

When the user performs a manipulation to start processing the sheet S, the controller 47 controls the first reader 71 to read the information indicated on the sheet S. The controller 47 acquires processing information for the sheet S from the information read by the first reader 71. The information read by the first reader 71 can be processing information for the sheet S, and may also be code C as shown in Fig. 7. When the information is code C, processing information previously stored in the memory 474 or an external terminal or PC is called up based on the image of the read code C. Alternatively, or additionally, a number for calling up processing information to be applied to the sheet S from the memory 474 of the controller 47 may be acquired from the image of the information J read by the first reader 26. This allows the controller 47 to acquire the processing information. The processing information for the sheet S may include, for example, the length L3 of the sheet S in the conveyance direction F, the length of the sheet S in the width direction W, the thickness of the sheet S, the cutting position of the sheet S, the crease formation position, and the like.

The calculation part 471 calculates the length by which each of the left and right slitter 201 in the slitter 20 should move in the width direction W from the home position to each cutting position, from the position information for cutting along the conveyance direction F, based on the acquired processing information. The processor 475 controls the moving part to move the slitters 201 in the width direction W by the values obtained as a result of the calculation. The calculation part 471 also calculates the length by which the sheet S should be conveyed by the conveyance part 4 to each cutting position after the leading edge Ef of the sheet S is detected by a predetermined detector 90, from the position information for cutting along the width direction W.

Afterward, the controller 47 feeds the sheets S one by one from the plurality of sheets S on the placing table 36 to the conveyance path 5 by the suction conveyor 31. At this time, the controller 47 drives the suction means to start the sucking action. When it is detected that the uppermost sheet S has been attracted to the lower surface of the suction box 314 via the belt 313, the controller 47 rotates the rollers 311 and 312 to run the belt 313. As the belt 313 runs, the sheet S is conveyed downstream on the conveyance path 5 with one side edge Es of the sheet S kept along the guide wall 361.

The leading edge Ef of the sheet S advances forward from above the disposed position of the contact member 37. When the leading edge Ef of the sheet S reaches the disposed position of the multi-feed detector 35, the multi-feed detector 35 detects whether multi-feed of the sheets S occurs. The controller 47 determines whether the sheets S being conveyed is multi-fed based on the signal received from the ultrasonic sensor. At that time, the controller 47 can refer to the thickness of the sheet S included in the processing information acquired from the code C. Based on the received signal, the controller 47 determines whether the sheet S is a single sheet or multiple sheets, i.e., multi-fed sheets.

When the leading edge Ef of the sheet S reaches the disposed position of the first detector 91, the leading edge Ef of the sheet S is detected by the first detector 91. When the sheet S is normally conveyed, the first detector 91 detects the presence of the sheet S on the conveyance path 5 while the sheet S of the third length L3 passes through the disposed position of the first detector 91. When the trailing edge Eb of the sheet S passes through the disposed position of the first detector 91, the first detector 91 detects the sheet S of the third length L3. The controller 47 determines that the sheet S is normally conveyed because the first detector 91 has detected the sheet S of the third length L3.

The skew correction mechanism 32 corrects the skew of the sheet S. When the conveyance of the sheet S sent onto the belt 323 is skewed, the conveyance is corrected so that the sheet S is conveyed in a direction parallel to the guide member 324. At that time, the controller 47 runs the belt 323 so that the sheet S is conveyed toward the guide member 324. When the side edge Es of the sheet S is conveyed downstream while contacting the guide member 324, the skew of the sheet S is corrected.

Downstream of the skew correction mechanism 32, the sheet S is conveyed by the rollers 8 and 9. When the leading edge Ef of the sheet S reaches the downstream side of the roller 9, the leading edge Ef of the sheet S is detected by the second detector 92. Thereafter, information on the sheet S is read by the second reader 72, and the controller 47 acquires the read information. The read information is temporarily stored in the memory 474. When the second reader 72 cannot properly read the information, the controller 47 causes the reject mechanism 25 to reject the sheet S from the conveyance path 5.

The controller 47 adjusts the position of the processing member 191 based on the information read by the first reader 71 and the second reader 72. In addition, the controller 47 controls the conveyance part 4 to adjust the timing at which the sheet S is stopped in order that the sheet S is processed by the creaser 21 and the transverse cutting part 22.

The controller 47 grasps the printing position of the sheet S on the conveyance path 5 from the information of the read mark M. Then, based on the information of the mark M, each slitter 201 of the slitter 20 is moved to a proper position to perform slitting work.

When the sheet S reaches the transverse cutting part 22, the sheet S is subjected to a cutting process along the width direction W by the upper blade 221 and the lower blade 222. At that time, the timing to stop the conveyance of the sheet S can be corrected depending on the position of the mark M on the conveyance path 5. If the third to fifth detectors 93 to 95 detect a conveyance error of the sheet S, the timing to stop the conveyance of the sheet S can further be corrected. The processed product Q obtained by the working process in the processing part 19 is discharged to the discharge table 61.

When the working process of a first sheet S1 is completed, the controller 47 starts processing a second sheet S. The controller 47 controls the first reader 71 to read the information indicated on the second sheet S. Upon starting to process a second sheet S2, if the entire second sheet S2 is on the placing table 36 and a leading edge Ef2 of the second sheet S2 is in contact with the contact member 37, the second sheet S2 is suction-conveyed by the suction conveyor 31 similarly to the first sheet S, after the controller 47 reads the information using the reading mechanism 26.

When the sheets S stacked vertically on the placing table 36 are properly separated by the air flow from the blower 38, the succeeding sheet S does not advance from above the placing table 36 downstream of the disposed position of the contact member 37 while the preceding sheet S is being conveyed. However, for some reason, such as the sheets S not being sufficiently separated by the blower 38, the first sheet S1 and the second sheet S2 may be simultaneously attracted to the suction box 314 and conveyed from above the placing table 36 forward of the disposed position of the contact member 37.

The second sheet S2 is conveyed further downstream beyond above the disposed position of the contact member 37 while still overlapping the first sheet S1. However, if the second sheet S2 is separated from the first sheet S before it reaches the disposed position of the multi-feed detector 35, the second sheet S2 will remain at the position on the conveyance path 5 where it was separated from the first sheet S 1. At this time, the multi-feed detector 35 does not detect multi-feed. The controller 47 determines that the first sheet S1 is being conveyed normally. This is because the second sheet S2 has already been separated from the first sheet S1, i.e., because the two sheets S are not conveyed overlapping each other, so that there is no multi-feed.

Subsequently, when the trailing edge Eb of the first sheet S1 passes through the disposed position of the first detector 91, the first detector 91 detects that the first sheet S1 has the third length L3. This is because the leading edge Ef2 of the second sheet S2 remains positioned on the conveyance path 5 between the first detector 91 and the contact member 37. Even when a trailing edge Eb1 of the first sheet S1 passes through the disposed position of the first detector 91, since the second sheet S2 and the first sheet S1 have already been separated, the first detector 91 does not detect that the first sheet S1 has a fourth length L4 longer than the third length L3 that is the length of the sheet S in the conveyance direction F.

The controller 47 conveys the first sheet S1 released from the second sheet S2 downstream without stopping the conveyance of the first sheet S1 due to improper conveyance of the sheet S. Then, the controller 47 processes the first sheet S1 in the processing part 19.

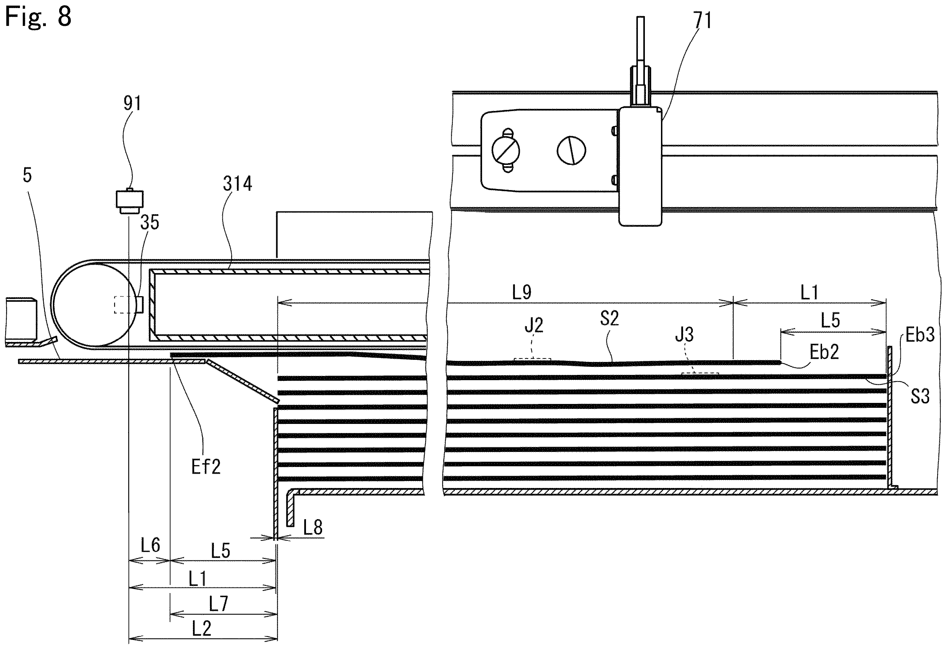

After the first sheet S is processed, the controller 47 controls the first reader 71 to read the information indicated on the second sheet S2 in order to process the second sheet S2. Fig. 8 is an enlarged view showing the state of the sheet S on the placing table 36 at the start of processing the second sheet S2. As shown in the figure, the leading edge Ef2 of the second sheet S2 is at a position downstream from the disposed position of the contact member 37 by a fifth length L5. The length from the leading edge Ef2 of the second sheet S2 to the disposed position of the first detector 91 in a plan view is a sixth length L6. The length from the disposed position of the first detector 91 to the disposed position of the contact member 37 in a plan view is the first length L1. At this time, L1=L5+L6. For example, when the first length L1 is 100 mm and the fifth length L5 is 80 mm, the sixth length L6 is 20 mm.

When the leading edge Ef of the third and subsequent sheets S placed in the placement part 33 is at a position in contact with the contact member 37, the length in a plan view from the leading edge Ef2 of the second sheet S2 to a leading edge Ef3, which is the downstream edge of a third sheet S3 placed in the placement part 33, is defined as a seventh length L7. Let the disposed position of the contact member 37 in a plan view be the center of the contact member 37 in the conveyance direction F, that is, the position of half a thickness L8 of the contact member 37. At this time, the seventh length L7 is longer than the fifth length L5 by half the thickness L8 of the contact member 37. That is, L7=L5+L8/2. In addition, a second length L2, which is the length in a plan view from the disposed position of the first detector 91 to the downstream edge Ef of the third and subsequent sheets S placed in the placement part 33, is the sum of the first length L1 and half the eighth length L8. That is, L2=L1+L8/2.

In the first embodiment, the leading edge Ef of the sheets S on the placing table 36 lies at a position in contact with the contact member 37, and the thickness L8 of the contact member 37 is much shorter than the third length L3 that is the length of the sheet S in the conveyance direction F, so that the seventh length L7 is substantially equal to the fifth length L5. For this reason, in the following description of the first embodiment, the seventh length L7 will be described as the fifth length L5, as necessary. In the first embodiment, the second length L2 is substantially equal to the first length L1. In the following description of the first embodiment, the second length L2 will be described as the first length L1, as necessary.

A trailing edge Eb2 of the second sheet S2 lies downstream from a trailing edge Eb3 of the third sheet S3 by the fifth length L5. The information printed on the sheet S is printed in a predetermined area apart from the trailing edge Eb of the third and subsequent sheets S by at least the first length L1 that is the length in a plan view from the disposed position of the first detector 91 to the disposed position of the contact member 37.

In Fig. 8, in order to make it possible to understand the position of the information J printed on the sheet S in the conveyance direction F, the printing position of the information J is indicated by a broken line on the upper surface of the sheet S. Information J3 of the third sheet S3 is printed in an area corresponding to the ninth length L9 spaced apart at least the first length L1 from the trailing edge Eb3 of the third sheet S3.

Above the position of the information J3 printed on the third sheet S3, there lies a rear portion of the second sheet S2. When viewed from above the placing table 36, the information J3 of the third sheet S3 is hidden by the second sheet S2. In this state, when the first reader 71 reads the information J of the sheets S on the placing table 36, the first reader 71 reads the information J2 printed on the topmost second sheet S2. Because the information J3 of the third sheet S3 lies below the second sheet S, the first reader 71 cannot read the information J3 of the third sheet S3 that is hidden by the second sheet S2.

For example, assume that the information J is printed at a position of approximately 105 mm to 110 mm from the trailing edge Eb of the sheet S, which is more than 100 mm forward from the trailing edge Eb. When the first length L1 and the fifth length L5 are 100 mm and 80 mm, respectively, the trailing edge Eb2 of the second sheet S2 lies 80 mm downstream from the trailing edge Eb3 of the third sheet S3. The trailing edge Eb2 of the second sheet S2 lies upstream from the position of approx. 105 mm to 110 mm from the trailing edge Eb3, at which the information J3 of the third sheet S3 is printed. When viewed from above the placing table 36, the information J3 of the third sheet S3 is hidden by the second sheet S2.

In this way, even when the second sheet S2 is conveyed somewhat downstream together with the first sheet S 1 and, as a result, the leading edge Ef2 of the second sheet S2 is positioned between the first detector 91 and the contact member 37, the first reader 71 can properly read the information J2 of the second sheet S2 at the time of working the second sheet S2. The information J3 of the third sheet S3 is printed in an area corresponding to the ninth length L9 and is hidden by the second sheet S2, so that the first reader 71 will not erroneously read the information J3 of the third sheet S3.

Assume that the information J3 of the third sheet S3 is printed in an area corresponding to the first length L1 and, therefore, is not hidden by the second sheet S2 and is visible from above the placing table 36. In this case, the first reader 71 can read both the information J2 of the second sheet S2 and the information J3 of the third sheet S3. If the first reader 71 mistakenly reads the information J3 of the third sheet S3 when working the second sheet S2, the controller 47 works the second sheet S2 based on the information J3 of the third sheet S3, and hence the second sheet S2 may not be processed properly, resulting in wasted paper.

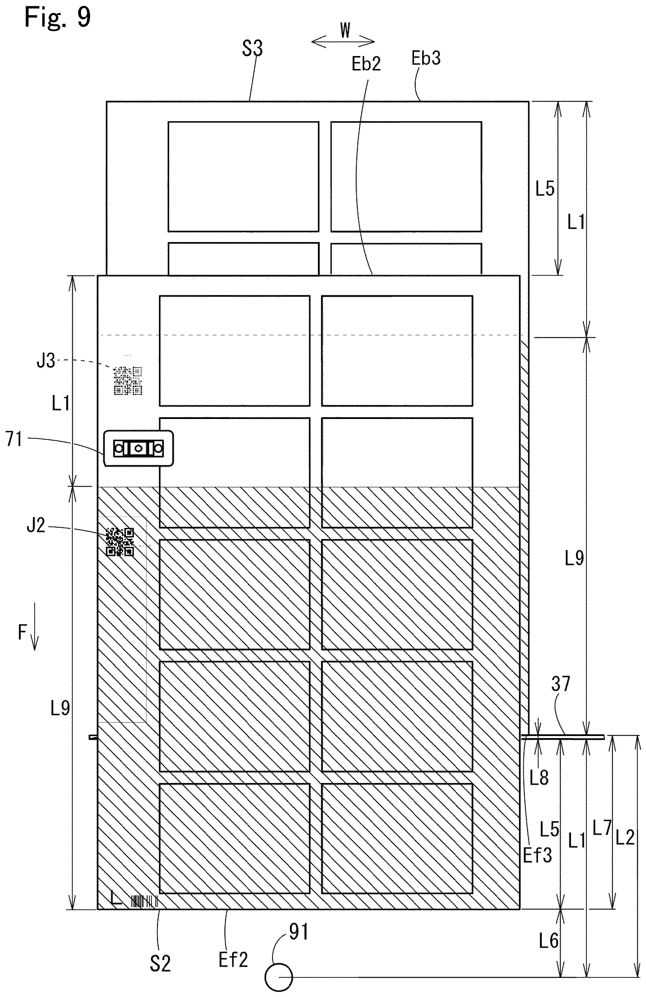

Fig. 9 is a view of the second sheet S2 and the third sheet S3 as viewed from above. In order to make it easier to understand the positional relationship between the upper and lower sheets S, the side edges Es of the sheets S are shown shifted in the width direction W. The second sheet S2 lies downstream in the conveyance direction F from the third sheet S3 by the fifth length L5. The fifth length L5 is substantially equal to the seventh length L7, which is the length in a plan view from the leading edge Ef2 of the second sheet S2 located between the first detector 91 and the contact member 37 to the leading edge Ef3 of the third sheet S3. The fifth length L5 is shorter than the first length L1 that is the length in a plan view from the disposed position of the first detector 91 to the disposed position of the contact member 37. The information J3 of the third sheet S3 is printed in a shaded area corresponding to the ninth length L9 spaced apart at least the first length L1 from the trailing edge Eb3 of the third sheet S3. The information J3 of the third sheet S3 is hidden by the second sheet S2. The first reader 71 reads the information J2 of the second sheet S2, but does not read the information J3 of the third sheet S3 that is hidden by the second sheet S2. This allows the controller 47 to properly process the second sheet S2 based on the information J2 of the second sheet S2 read by the first reader 71.

The controller 47 acquires processing information for the second sheet S2 based on the information J2 read by the first reader 71. The controller 47 calculates the position of the slitter 201 based on the acquired processing information and moves it to a proper position in the width direction W. Note that, if the processing position of the slitter 201 for the first sheet is the same as that for the second sheet, the controller 47 may control the moving unit to keep the slitter 201 at the processing position for the first sheet without moving it. This eliminates the need for time to move the slitter 201 and can shorten the working time.

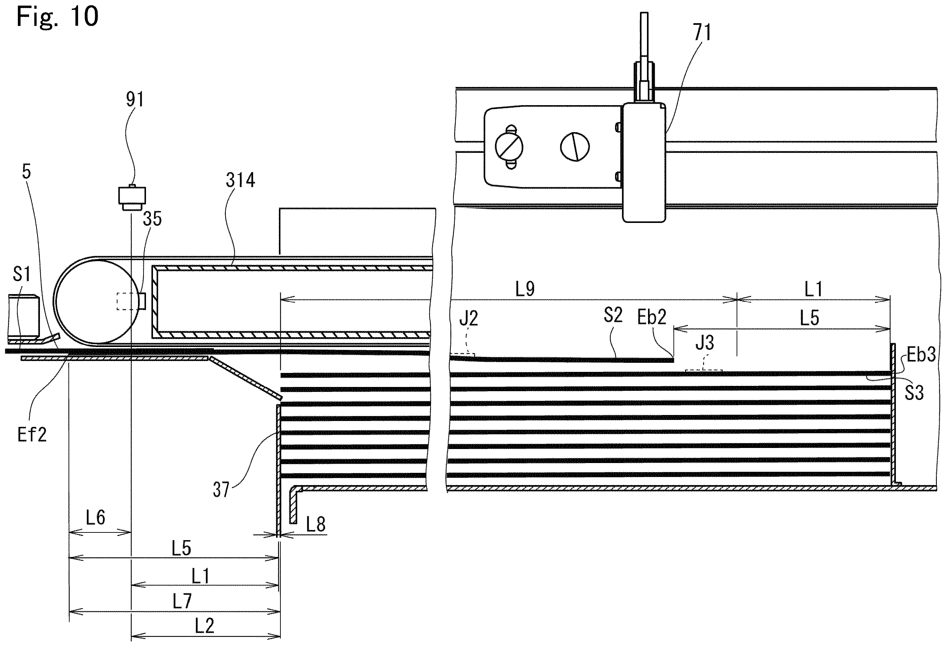

Fig. 10 is an enlarged view showing a state after a plurality of sheets S are simultaneously sucked from the placing table 36 to the suction box 314 and reaches the disposed position of the multi-feed detector 35 without the upper and lower sheets S being completely separated before reaching the disposed position of the multi-feed detector 35. When, with the lower sheet S overlapping the upper sheet S, they are conveyed downstream beyond the disposed position of the contact member 37 and reaches the disposed position of the multi-feed detector 35, the multi-feed detector 35 detects the multi-feed.

As shown in Fig. 10, when a plurality of sheets S reach the disposed position of the first detector 91 while partially overlapping each other, the first detector 91 does not detect the third length L3. The first detector 91 detects sheets S having a fourth length L4 longer than the third length L3.

In Fig. 10, the trailing edge Eb2 of the second sheet S2 is at a position of the fifth length L5 that is longer than the first length L1, so that the second sheet S2 is not above the position where the information J3 of the third sheet S3 is printed. When viewed from above the placing table 36, the information J3 of the third sheet S3 is visible without being hidden by the second sheet S2.

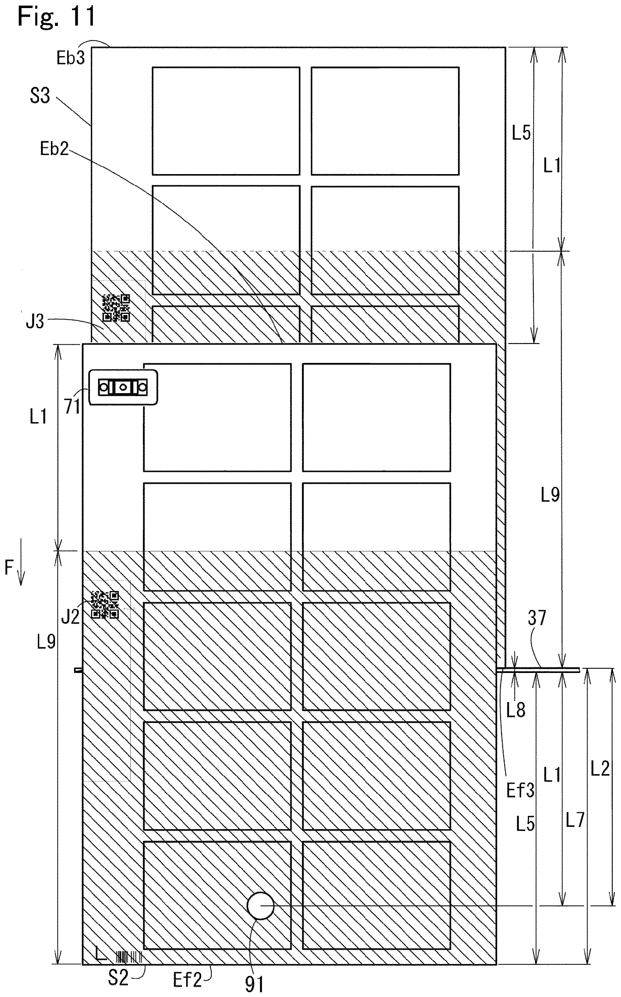

Fig. 11 is a view of the second and third sheets S of Fig. 10 viewed from above. The information J3 of the third sheet S3 is not hidden by the second sheet S2 and is readable by the first reader 71. The information J3 of the third sheet S3 is printed in a shaded area corresponding to the ninth length L9 that is at least the first length L1 apart from the trailing edge Eb3 of the third sheet S3. However, since the second sheet S2 lies downstream of the third sheet S3 by the fifth length L5 that is longer than the first length L1, the information J3 of the third sheet S3 is located upstream of the trailing edge Eb2 of the second sheet S2, resulting in exposed state. When the first reader 71 attempts to read the information of the sheet S, it can read both the information J2 of the second sheet S2 and the information J3 of the third sheet S3.

In this way, upon conveying the first sheet S1, when the second sheet S2 is conveyed together with the first sheet S1 while overlapping and when the leading edge Ef2 of the second sheet S2 reaches the first detector 91, the first detector 91 detects a sheet S having the fourth length L4 longer than the third length K3 that is the length of the sheet S in the conveyance direction F. At this time, the controller 47 decides not to process in the processing part 19 the first sheet S1 determined to be the sheet S having the fourth length L4. Since the second sheet S2 is conveyed downstream from the leading edge Ef of the sheet S by the first length L1 or more, the information J3 of the third sheet S3 is readable by the first reader 71. However, when the first detector 91 detects the sheet S having the fourth length L4 longer than the third length L3, the controller 47 decides not to process the sheet S having the fourth length in the processing part 19. Thus, the first reader 71 does not read the erroneous information J, preventing the sheet S from being improperly processed.

At this time, the controller 47 determines not to process the sheet in the processing part 19 based on the fact that the multi-feed detector 35 has detected the multi-feed. This is because the first sheet S1 has not been conveyed normally.

The controller 47 removes both the first and second sheets S1 and S2 from the conveyance path 5. When removing the sheets S from the conveyance path 5, the controller 47 conveys the plurality of sheets S sent in an overlapping state to the downstream reject mechanism 25 by the skew correction mechanism 32 and the rollers 8, 9, and 10 of the conveyance part 4. Then, the controller 47 drives the drive source of the revolving member 251 to revolve the revolving member 251 from a horizontal posture to a tilted posture. The sheet S is: guided downward by the revolving member 251 in the tilted posture; sent by the guide member 254 and the reject roller 253; and collected in the reject tray 252. Thus, the controller 47 causes the reject mechanism 25 to collect the first sheet S1 detected to have the fourth length L4 in the reject tray 252.

When, as in the first embodiment, the first detector 91 is disposed adjacent to the multi-feed detector 35 in the width direction W at the same position in the conveyance direction F as the multi-feed detector 35, the multi-feed detector 35 first detects the multi-feed of the sheets S, and then the first detector 91 detects the sheet of the fourth length L4. By detecting the multi-feed with both the multi-feed detector 35 and the first detector 91, the occurrence of the multi-feed can be detected more reliably. This makes it possible to more reliably prevent the occurrence of a problem that expensive sheets S with a coated surface are erroneously processed.

The sheets S collected on the reject tray 242 are usually left as they are until the other sheets S on the placing table 36 have been processed. However, if it is undesirable for the order of the processed products Q to be changed by rejecting the sheets, the user may stop the processing action by setting otherwise. The user collects the sheets S removed from the conveyance path 5 from the reject tray 252 or from the conveyance path 5, and re-stacks them on the placing table 36. Thus, the sheets S are processed in a predetermined order and stacked on the discharge table 61.

As described above, the apparatus for processing sheets 1 according to the first embodiment includes: the conveyance part 4 that conveys a sheet; and the processing part 19 that works the sheet S conveyed by the conveyance part 4 at a predetermined position on the sheet S, the apparatus for processing sheets 1 further including: the placement part 33 on which a plurality of sheets S to be processed by the processing part 19 are placed; the detector 90 disposed on the conveyance path 5 between the placement part 33 and the processing part 19, for detecting the sheet S; the reading mechanism 26 disposed in the placement part 33, for reading information printed on the sheet S; and the controller 47 acting as a controller that controls the processing part 19 to work the sheet S based on the information read by the reading mechanism 26. The reading mechanism 26 reads information J printed in a predetermined area on the sheet S apart from the trailing edge Eb of the sheet S by at least the first length L1 that is the length in a plan view from the disposed position of the detector 90 to the disposed position of the contact member 37 with which the leading edge Ef of the sheet S placed in the placement part 33 comes into contact. Hence, upon processing the sheet S in the processing part 19 based on the information read by the reading mechanism 26, the sheet S can be processed properly since the reading mechanism 26 does not erroneously read the information.

In addition, since the first reader 71 is disposed movably, the first reader 71 can be moved to a proper position depending on the printing position of the information J on the sheet S.

### Second Embodiment

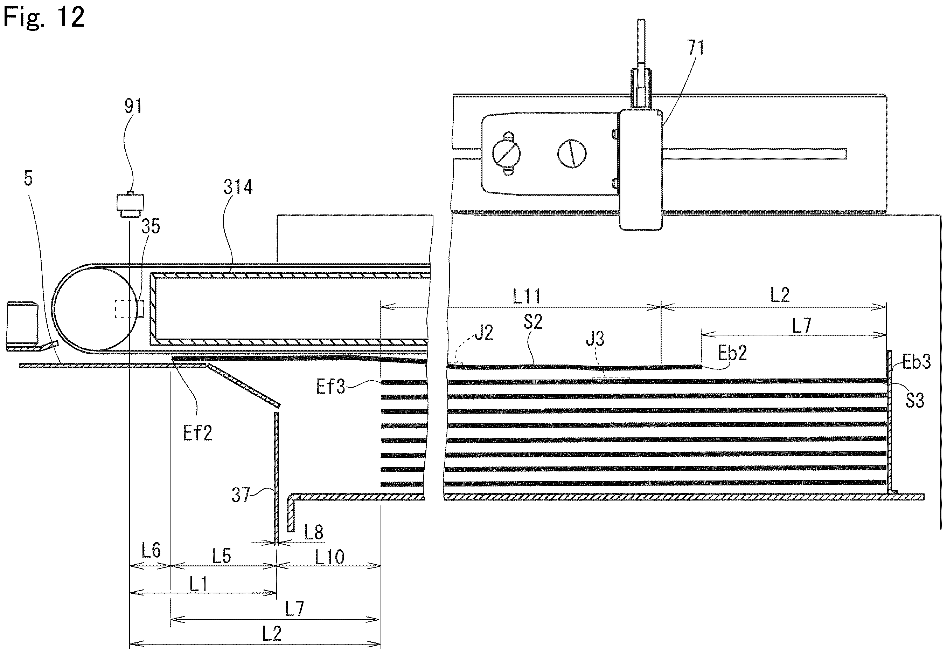

In the first embodiment, the leading edge Ef of the third and subsequent sheets S placed in the placement part 33 lies at a position in contact with the contact member 37, but in the second embodiment, the leading edge Ef of the sheet S placed in the placement part 33 is at a position not in contact with the contact member 37. Fig. 12 is an enlarged view showing the state of the sheets S on the placing table 36 in the second embodiment. In Fig 12, the leading edge Ef of the third and subsequent sheets S placed in the placement part 33 is located upstream of the disposed position of the contact member 37 by a tenth length L10.

The first sheet S1 and the second sheet S2 are conveyed while overlapping each other, and are separated on the conveyance path 5 between the first detector 91 and the contact member 37. The first sheet S1 is then conveyed normally and processed. The leading edge Ef2 of the second sheet S2 does not reach the disposed position of the first detector 91 and is not detected by the first detector 91. The leading edge Ef2 of the second sheet S2 lies upstream of the first detector 91 by the sixth length L6. The leading edge Ef2 of the second sheet S2 lies downstream of the disposed position of the contact member 37 by the fifth length L5 in a plan view.

The length in a plan view from the leading edge Ef2 of the second sheet S2 to the leading edge Ef3, which is the downstream edge of the third sheet S3 placed in the placement part 33, is the seventh length L7. The seventh length L7 is the fifth length L5 plus the tenth length L10. That is, L7=L5+L10.

The second length L2 is the length in a plan view from the disposed position of the first detector 91 to the downstream edge Ef of the third and subsequent sheets S placed in the placement part 33. The second length L2 is the sum of the first length L1 and the tenth length L10. That is, L2=L1+L10.

In the second embodiment, the information J printed on the sheet S is located in an area apart from the trailing edge Eb of the sheet S by at least the second length L2 that is the length in a plan view from the disposed position of the first detector 91 to the downstream edge Ef of the sheet S placed in the placement part 33. The information J3 of the third sheet S3 is printed in an area corresponding to the eleventh length L11 that is at least the second length L2 apart from the trailing edge Eb3 of the third sheet S3. When viewed from above the placing table 36, the information J3 of the third sheet S3 is printed in an area corresponding to the eleventh length L11 of the third sheet S3 and is hidden by the second sheet S2. Even when the sheet S is placed upstream of the disposed position of the contact member 37, the first reader 71 can properly read only the information J2 printed on the uppermost second sheet S2.

For example, let the first length L1, the fifth length L5, and the tenth length L10 be 100 mm, 80 mm, and 30 mm, respectively. The seventh length L7 is L7=80+30=110 mm. The second length L2 is L2=L1+L10=100+30=130 mm. The information J is printed at approx. 135 mm to 140 mm from the trailing edge Eb of the sheet S, which is at least 130 mm forward from the trailing edge Eb. The trailing edge Eb2 of the second sheet S2 is located 110 mm downstream from the trailing edge Eb3 of the third sheet S3. The trailing edge Eb2 of the second sheet S2 lies at a position 110 mm downstream from the trailing edge Eb3 of the third sheet S3, which is upstream of a position 135 mm to 140 mm downstream from the trailing edge Eb3 where the information J3 of the third sheet S3 is printed. The information J3 of the third sheet S is hidden by the second sheet S2.

In the second embodiment, the reader 71 reads the information J printed in an area apart from the trailing edge Eb of the sheet S by at least the second length L2 that is the length in a plan view from the disposed position of the first detector 91 to the downstream edge Eb of the sheet S placed in the placement part 33. When a plurality of sheets S are conveyed downstream from the placement part 33 beyond the disposed position of the contact member 37 while overlapping and the leading edge Ef of the lower sheet S stops on the conveyance path 5 downstream by the fifth length L5 from the disposed position of the contact member 37 between the first detector 91 and the contact member 37, the information J of the lower sheet S is hidden by the upper sheet S upon working the lower sheet S because it is printed in an area spaced apart at least the second length L2 from the trailing edge Eb of the sheet S. The first reader 71 can properly read the information J of the lower sheet S.

The present disclosure is not limited to the first and second embodiments, and can be implemented in various modes. For example, five detachable processing units are used as the processing part that processes the sheet S in the conveyance direction F of the sheet S, but the number of processing units in the conveyance direction of the sheet S, their arrangement order, and their apparatus for processing sheets may appropriately be changed depending on the desired processing content. The same applies to the processing units in the width direction of the sheet.

The location and number of the detectors 90 can also be changed as appropriate depending on the processing unit to be used. In the above embodiments, the first to sixth detectors 91 to 96 are disposed to detect the conveyance error in the longitudinal direction of the sheet S, but the first to sixth detectors may not be disposed and the sheet position of each sheet conveyed on the sheet conveyance path may be uniquely detected based only on the sheet position detected by any one of the first to fifth detectors.

The slitter 201 of the slitter 20, which can move transversely and be positioned transversely, performs longitudinal cutting, but is not limited thereto, and may be used to perform a working process appropriately selected from longitudinal perforating, longitudinal creasing, corner rounding of a workpiece, etc. These apparatus for processing sheets move transversely for positioning when there is no sheet in the processing unit, i.e., when the sheet is not caught in the apparatus for processing sheets.

Although the information J is disposed near the left edge EL of the sheet S, it may be disposed in another area of the sheet, for example, in the center of the sheet in the width direction, or at a position about one-third or one-quarter of the sheet width in the width direction from the left edge of the sheet, or near the right edge. Furthermore, the mark M may be a square, triangle, or polygon instead of an L-shape. The mark M and the barcode B are disposed near the leading edge Ef of the sheet, but may be in the center or rear portion of the sheet in the conveyance direction.

When multi-feed of the sheets occurs, the reject mechanism removes the sheets from the conveyance path 5, but instead of this, the conveying of the sheets may be stopped by stopping the rotation of the rollers and the running of the belt. In this case, the user can recover the sheets and place them again on the feed table by rotating the rollers in the reverse direction and running the belt in the reverse direction as necessary. The sheets may also be discharged to the discharge table via the conveyance path without being processed. Removal of the sheets from the conveyance path, stopping the conveying, and discharging to the discharge table via the conveyance path may be performed by combining them as appropriate.

Although the controller 47 adjusts the processing position of the sheet S in the processing part 19 based on the detection result of the detector 90, the adjustment of the processing position is not essential. Although the detector 90 detects the position of an indication portion U in at least one of the conveyance direction F of the sheet S and the width direction W perpendicular to the conveyance direction F, it may detect the position thereof in a direction tilted toward the conveyance direction or may detect some other indication.

Although the contact member 37 is formed in a plate shape and extends in the up-down direction, but it may be composed of a plurality of juxtaposed and vertically extending rod-shaped members such as cylinders or prisms, or may be disposed so that only a part of the leading edge of the sheet, such as the center in the width direction, comes into contact with it. Although the first reader 71 constituting the reading mechanism 26 is above the placing table 36 and is detachably disposed on the upper end of the guide wall 361, it need not be detachable as long as it is disposed on the placement part, and it may be detachably disposed on the device body or fixed to the device body. Although the first reader 71 includes the angle adjuster 73 and the position adjuster 74, it may be a fixed type in which either or both of the angle and the position in the conveyance direction cannot be adjusted.

Although the second reader 72 is disposed, the second reader need not be disposed. Based on the information read by the second reader, the position of the sheet S on the conveyance path 5 is ascertained to adjust the processing position of the sheet S, but the processing position need not be adjusted depending on the position of the sheet on the conveyance path. Although, after the detector 90 detects the trailing edge Eb of the sheet S, the reading mechanism 26 reads information on the subsequent sheet, the reading mechanism may read information on the subsequent sheet before the detector detects the trailing edge of the sheet.

When the detector 90 detects the sheet S having the fourth length KL4 longer than the third length L3 that is the length of the sheet S in the conveyance direction F, control is performed so that the sheet S having the fourth length L4 is not processed by the processing part 19. However, it is not limited only such a control manner. When the detector 90 detects the sheet S having a length shorter than the third length L3, control may be performed so that the sheet S having the length shorter than the third length L3 is not processed by the processing part 19.

## Claims

1. A method for processing a sheet at a predetermined position on the sheet in a processing part, comprising:
placing a plurality of the sheets in a placement part;
reading, by a first reader disposed in the placement part, information printed in a predetermined area on the sheet spaced apart from a trailing edge of the sheet by at least a first length, the first length being the length in a plan view from a disposed position of a detector to a disposed position of a contact member with which leading edges of the sheets placed in the placement part come into contact, the detector detecting the sheet on a conveyance path for the sheet extending from the placement part to the processing part; and
processing the sheet based on the information read by the first reader.

2. The method according to claim 1, wherein the predetermined area is an area spaced apart from the trailing edge of the sheet by at least a second length that is the length in a plan view from the disposed position of the detector to a downstream edge of the sheet placed in the placement part.

3. The method according to claim 1 or 2, comprising:
reading the information on the sheet by a second reader disposed downstream of the placement part; and
determining a position of the sheet on the conveyance path based on the information read by the second reader to adjust a processing position on the sheet.

4. The method according to claim 1, comprising:
reading the information on a succeeding sheet by the first reader after the detector detects the trailing edge of the sheet.

5. The method according to claim 1, wherein when the detector detects the sheet having a fourth length longer than a third length that is the length of the sheet in the conveyance direction, the sheet having the fourth length is not processed in the processing part.

6. An apparatus for processing sheets having a conveyance part that conveys a sheet and a processing part that processes the sheet conveyed by the conveyance part at a predetermined position on the sheet, the apparatus comprising:
a placement part in which a plurality of the sheets to be processed by the processing part are placed;
a detector that detects the sheet, the detector being disposed on a conveyance path extending between the placement part and the processing part;
a reader disposed in the placement part to read information printed on the sheet; and
a controller configured to control the processing part to process the sheet based on the information read by the reader, wherein
the reader reads the information printed in a predetermined area on the sheet spaced apart from a trailing edge of the sheet by at least a first length that is the length in a plan view from a disposed position of the detector to a disposed position of a contact member with which leading edges of the sheets placed in the placement part come into contact.

7. The apparatus for processing sheets according to claim 6, wherein the reader is disposed in a movable manner.
